# EUROPÄISCHE PATENTANMELDUNG

(11) **EP 0 882 906 A2**
(43) Veröffentlichungstag der Anmeldung: **09.12.1998**
(21) Anmeldenummer: 98102676.8
(22) Anmeldetag: 17.02.1998
(51) Int. Cl.: F16F 7/09

(54) **Reibungsdämpfer**

(30) Priorität: 15.05.1997 DE 29708647 U
(71) Anmelder: SUSPA COMPART Aktiengesellschaft, 90518 Altdorf (DE)
(72) Erfinder: Mayer, Dieter, 92237 Sulzbach-Rosenberg (DE); Rössner, Reiner, 90518 Altdorf/Rasch (DE)
(74) Vertreter: Rau, Manfred, Dr. Dipl.-Ing.

(57) **Zusammenfassung**

Ein Reibungsdämpfer weist ein rohrförmiges Gehäuse (1) und einen in diesem in Richtung seiner Längsachse (4) verschiebbar geführten und aus einem Ende (10) desselben durch eine Einführöffnung (20) herausragenden Stößel (3) auf. Das Gehäuse (1) und der Stößel (3) sind jeweils an ihrem freien Ende mit einem Anschlußelement (2,6) versehen. Das Gehäuse (1) weist im Bereich seines stößelaustrittsseitigen Endes (10) einen an dem Stößel (3) anliegenden Dämpfungsbelag (15) auf, der in einem einstückig mit dem Gehäuse (1) ausgebildeten Dämpfungsgehäuse (11) angteordnet und dort durch einen Halte-Rand (17) gehalten ist, der eine der Einführöffnung (20) zugewandte Stirnseite (18) des Dämpfungsbelages (15) zumindest teilweise übergreift. Der Halte-Rand (17) ist einstückig mit dem Dämpfungsgehäuse (11) ausgebildet.

## Beschreibung

Die Erfindung betrifft einen Reibungsdämpfer nach dem Oberbegriff des Anspruches 1.

Bei einem derartigen aus dem ES-Gbm 285 746 bekannten Reibungsdämpfer ist der Halterand als gesonderter Ring nach dem Einsetzen des Dämpfungsbelages in das Dämpfungsgehäuse angeklebt bzw. dort durch Verschweißen befestigt. Diese Anbringung des Halterandes ist aufwendig, da zuvor ein solcher ringförmiger Halterand hergestellt und dann montiert und befestigt werden muß. Darüber hinaus besteht die Gefahr, daß er sich im Betrieb von dem Dämpfungsgehäuse löst, was zur Funktionsunfähigkeit des Reibungsdämpfers führen würde.

Der Erfindung liegt die Aufgabe zugrunde, den Reibungsdämpfer der gattungsgemäßen Art so auszugestalten, daß er einfacher herstellbar und besonders betriebssicher ist.

Diese Aufgabe wird erfindungsgemäß durch die Merkmale im Kennzeichnungsteil des Anspruches gelöst. Das Ausformen des einstückig mit dem Dämpfungsgehäuse ausgebildeten, den Dämpfungsbelag stirnseitig zumindest teilweise übergreifenden Halterandes ist herstellungstechnisch außerordentlich einfach durchführbar, was zu einer deutlichen Kostenreduktion bei der Herstellung des Reibungsdämpfers führt. Die Haltbarkeit des Halterandes ist in der Regel besser als bei einem angeklebten oder angeschweißten Halterand.

Vorteilhafte Ausgestaltungen des Reibungsdämpfers ergeben sich aus den Unteransprüchen.

Weitere Merkmale. Vorteile und Einzelheiten der Erfindung ergeben sich aus der nachfolgenden Beschreibung eines Ausführungsbeispieles anhand der Zeichnung. Es zeigt
- Fig. 1: einen Längsschnitt durch einen Reibungsdämpfer nach der Erfindung,
- Fig. 2: eine Teildarstellung des Gehäuses des Reibungsdämpfers im Längsschnitt vor dem Aufsetzen eines Verformungs-Werkzeuges,
- Fig. 3: den in Fig. 2 dargestellten Teil des Gehäuses mit aufgesetztem Verformungs-Werkzeug und
- Fig. 4: den in den Fig. 2 und 3 dargestellten Teil des Gehäuses nach der Ausformung des Halterandes.

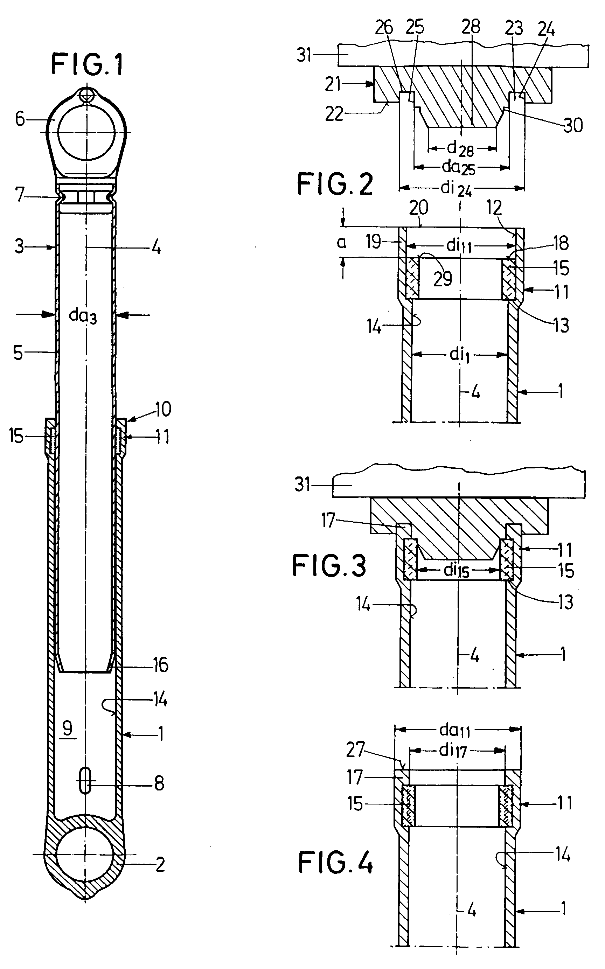

Der in Fig. 1 dargestellte Reibungsdämpfer weist ein rohrförmiges Gehäuse 1 auf, das einstückig aus Kunststoff gespritzt ist. An seinem freien Ende ist es mit einem Anschlußelement 2 in Form eines sogenannten Auges versehen. In dem Gehäuse 1 ist ein Stößel 3 in Richtung der gemeinsamen Längsachse 4 von Gehäuse 1 und Stößel 3 verschiebbar angeordnet. Dieser Stößel 3 besteht im wesentlichen aus einem relativ dünnwandigen Metallrohr 5 und einem an dessen äußerem freien Ende angebrachten Anschlußelement 6, das ebenfalls in Form eines sogenannten Auges ausgebildet ist. Die Verbindung zwischen Metallrohr 5 und Anschlußelement 6 ist beispielsweise durch eine Sicke 7 hergestellt.

Der Reibungsdämpfer kann mittels seiner Anschlußelemente 2 und 6 an zwei Teilen angelenkt werden, deren Bewegungen relativ zueinander gedämpft werden sollen. Ein wichtiges und wirtschaftlich sehr bedeutendes Anwendungsgebiet sind Waschmaschinen, wobei ein Anschlußelement 2 am Waschaggregat und ein Anschlußelement 6 an der Bodenplatte der Waschmaschine angelenkt werden.

Der Stößel 3 und das Gehäuse 1 sind relativ zueinander um ihre Längsachse 4 drehbar. Das Gehäuse 1 ist benachbart zum Anschlußelement 2 mit einer Ausgleichsöffnung 8 versehen, durch die der Innenraum 9 des Gehäuses 1 und des Stößels 3 mit der Atmosphäre verbunden werden. An dem dem Anschlußelement 2 entgegengesetzten stößelaustrittsseitigen Ende 10 des Gehäuses 1 ist in diesem ein Dämpfungsgehäuse 11 ausgebildet. Dieses ist - wie das Gehäuse 1 - ringzylindrisch ausgebildet und weist einen größeren Innendurchmesser di₁₁, auf als dem Innendurchmesser di₁ des Gehäuses 1 entspricht. Die zylindrische Innenwand 12 des Dämpfungsgehäuses 11 geht mit einer radial zur Längsachse 4 verlaufenden Anlagefläche 13 in die ebenfalls zylindrische Innenwand 14 des Gehäuses 1 über. Gegen diese Anlagefläche 13 liegt ein Reibungs-Dämpfungsbelag 15 an, der durch einen sich über den gesamten Umfang der Innenwand 12 des Dämpfungsgehäuses 11 erstreckenden, also etwa quaderförmigen Streifen, aus geschäumtem Kunststoff oder Filz oder dergleichen besteht. Bevorzugt wird geschlossenzelliger geschäumter Polyurethan-Schaumstoff verwendet. Die Dimensionierung des Dämpfungsbelages 15 ist derart, daß er vor dem Einführen des Stößels 3 in das Gehäuse 1 über die Anlagefläche 13 und die Innenwand 14 des Gehäuses 1 in Richtung zu Längsachse 4 weiter vorsteht, als dem Außendurchmesser da₃ des Stößels 3 entspricht, so daß er beim Einführen des Stößels 3 in das Gehäuse 1 zusammengepreßt wird, wodurch wiederum je nach Grad der Zusammenpressung unterschiedlich starke Anpreßkräfte und damit Reibungskräfte hervorgerufen werden können. Dieses Einführen des Stößels 3 wird durch eine Verjüngung 16 des Stößels 3 an seinem im Gehäuse 11 befindlichen Ende erleichtert. Soweit der Reibungsdämpfer bis hierher beschrieben ist, ist er im wesentlichen bekannt und zwar aus der EP 0 336 176 B1 (entspr. US-Patent 4,934,493) und dem ES-Gbm 285 746.

Der Reibungs-Dämpfungsbelag 15 wird im Dämpfungsgehäuse 1 gegen Verschieben nach außen durch einen von der Innenwand 12 in Richtung zur Längsachse 4 hin vorspringenden ringförmigen Halte-Rand 17 gehalten, der die zugewandte Stirnseite 18 des Dämpfungsbelages 15 teilweise übergreift, wie aus den Fig. 1, 3 und 4 hervorgeht. Dieser Halte-Rand 17 ist einstückig aus dem Dämpfungsgehäuse 11 ausgeformt und damit einstückig mit dem Gehäuse 1 ausgebildet, d.h. nicht als gesondertes Bauteil mit diesem durch Kleben, Schweißen oder dergleichen verbunden.

Aus den Fig. 2 und 3 ergibt sich die Herstellung des Halte-Randes 17. Wie sich aus Fig. 2 ergibt, weist das Dämpfungsgehäuse 11 einen Wandabschnitt 19 auf, der nach dem Einsetzen des Dämpfungsbelages 15 in das Dämpfungsgehäuse 11 von der Stirnseite 18 bis zur Einführ-Öffnung 20 des Gehäuses 1 um ein Maß a in Richtung der Längsachse 4 vorsteht. Dieser Wandabschnitt 19 wird durch Verformung, d.h. im wesentlichen durch Stauchen in Richtung der Längsachse 4 zu dem die Stirnseite 18 des Dämpfungsbelages 15 teilweise übergreifenden Halte-Rand 17 verformt. Hierzu ist ein Werkzeug 21 vorgesehen, das in seiner Strinseite 22 eine Ringnut 23 aufweist, deren Abmaße denen des zu erzeugenden Halte-Randes 17 entsprechen. Sie weist eine zylindrische Außenwand 24 auf, deren Innendurchmesser di₂₄ dem Außendurchmesser da₁₁ des Dämpfungsgehäuses 11 entspricht. Sie weist weiterhin eine zylindrische Innenwand 25 auf, deren Außendurchmesser da₂₅ dem Innendurchmesser di₁₇ des Halte-Randes 17 entspricht. Der radial zur Längsachse 4 verlaufende ringförmige Boden 26 der Ringnut 23 formt die äußere Stirnseite 27 des Halte-Randes 17. Das Werkzeug 21 weist innerhalb der Ringnut 23 einen Einführkonus 28 auf, dessen Durchmesser d₂₈ an dessen Ende kleiner ist als der Innendurchmesser di₁₅ des Reibungs-Dämpfungsbelages 15 in unverformtem Zustand. Hierdurch wird sichergestellt, daß das Werkzeug 21 gegen den Wandabschnitt 19 des Gehäuses 1 herangeführt werden kann, ohne daß der Dämpfungsbelag 15 in Richtung des Längsachse 4, also in Richtung zur Anlagefläche 13 hin deformiert wird. Am Übergang vom Einführkonus 28 zur Innenwand 25 der Ringnut 23 ist eine dem Bereich der Innenkante 29 des Dämpfungsbelages 15 angepaßte ringförmige Ausnehmung 30 ausgebildet. In diese Ausnehmung 30 gelangt der Bereich der Innenkante 29, der der Stirnseite 18 und des Dämpfungsbelages 15 zugeordnet ist, wenn das Werkzeug 21 zur Herstellung des Halte-Randes 17 in den Wandabschnitt 19 eingefahren ist.

Das Werkzeug 21 ist an einem nur angedeuteten Stempel 31 angebracht, der beheizbar ausgebildet sein kann, so daß wiederum auch das Werkezeug 21 selbst beheizt ist. Beim Einschieben des Werkzeuges 21 in den Wandabschnitt 19 wird dieser von dem Werkzeug 21 her erwärmt und damit erweicht, so daß dieser Wandabschnitt durch den in Richtung der Längsachse 4 wirkenden Druck verformt wird, bis er die Ringnut 23 unter Bildung des Halte-Randes 17 vollständig ausfüllt. Der Stempel 31 kann auch als Ultraschall-Sender, d.h. als eine sogenannte Sonotrode, ausgebildet sein. In diesem Fall wird der Wandabschnitt 19 vor dem Zuführen des Stempels 31 mit dem Werkzeug 21 bis zu einer Erweichungstemperatur erwärmt und dann die Verformung durch Zuführen des Werkzeuges 21 unter gleichzeitiger Ultraschallerregung des Werkzeuges 21 verformt.

## Patentansprüche

1. Reibungsdämpfer mit einem rohrförmigen Gehäuse (1) und einem in diesem in Richtung seiner Längsachse (4) verschiebbar geführten und aus einem Ende (10) desselben durch eine Einführöffnung (20) herausragenden Stößel (3), wobei das Gehäuse (1) und der Stößel (3) jeweils an ihrem freien Ende mit einem Anschlußelement (2, 6) versehen sind und wobei das Gehäuse (1) im Bereich seines stößelaustrittsseitigen Endes (10) einen an dem Stößel (3) anliegenden Dämpfungsbelag (15) aufweist, der in einem einstückig mit dem Gehäuse (1) ausgebildeten Dämpfungsgehäuse (11) angeordnet und dort durch einen Halte-Rand (17) gehalten ist, der eine der Einführöffnung (20) zugewandte Stirnseite (18) des Dämpfungsbelages (15) zumindest teilweise übergreift, dadurch gekennzeichnet, daß der Halte-Rand (17) einstückig mit dem Dämpfungsgehäuse (11) ausgebildet ist.

2. Reibungsdämpfer nach Anspruch 1, dadurch gekennzeichnet, daß der Halte-Rand (17) durch Stauchen eines der Einführöffnung (20) benachbarten Wandabschnitts (19) des Dämpfungsgehäuses (11) in Richtung der Längsachse (4) gebildet ist.

3. Reibungsdämpfer nach Anspruch 1 oder 2, dadurch gekennzeichnet, daß der Halte-Rand (17) durch Ultraschall geformt ist.

4. Reibungsdämpfer nach einem der Ansprüche 1 bis 3, dadurch gekennzeichnet, daß der Halte-Rand (17) thermisch geformt ist.
